# EUROPEAN PATENT APPLICATION

(11) **EP 4 403 050 A1**
(43) Date of publication of application: **24.07.2024**
(21) Application number: 22869027.7
(22) Date of filing: 30.08.2022
(51) Int. Cl.: A24F 40/40

(54) **SPLIT-TYPE AEROSOL GENERATING DEVICE**

(30) Priority: 14.09.2021 CN 202111076123
(71) Applicant: Shenzhen Merit Technology Co., Ltd., Shenzhen, Guangdong 518105 (CN)
(72) Inventor: YANG, Hui, Shenzhen, Guangdong 518105 (CN); ZHANG, Xingfu, Shenzhen, Guangdong 518105 (CN); LIN, Qiaoshi, Shenzhen, Guangdong 518105 (CN)
(74) Representative: Herrero & Asociados, S.L.
(86) International application number: PCT/CN2022/115910
(87) International publication number: WO 2023/040655

(57) **Abstract**

A split-type aerosol generating device (1), comprising: an aerosol generating unit (10) used for generating aerosol, the aerosol generating unit (10) comprising at least one hybrid capacitor (11); and a current source power supply unit (20) connected to the aerosol generating unit (10) and used for charging the at least one hybrid capacitor (11). By using the current source power supply unit (20) as a power supply device and using the hybrid capacitor (11) as the power source of the aerosol generating unit (10), the current source power supply unit (20) outputs a large current to charge the hybrid capacitor (11), thereby shortening the charging time and improving charging efficiency.

## Description

### TECHNICAL FIELD

The present disclosure relates to the field of electronic atomization devices, and in particular to a split-type aerosol generating device.

### BACKGROUND

As an emerging technology, an electronic atomization device replaces a traditional burning-type cigarette by heating e-liquid or low-temperature baking cigarette. An operating temperature of the electronic atomization device is low, and harmful components in the smoke generated by the electronic atomization device are far less than those of the traditional burning-type cigarette. The use of the electronic atomization device may greatly avoid the adverse effects of cigarettes on the human body, so that smoking by using the electronic atomization device becomes a healthier way of smoking.

At present, aerosol generating devices on the market are mainly divided into two types, one type is the electronic atomization device that heats a liquid aerosol generating substrate, and the other type is the electronic atomization device that heats a solid aerosol generating substrate at a low temperature but does not burn the solid aerosol generating substrate.

In the related art, the aerosol generating devices are usually charged by a constant voltage source. In the last half of a charge period, the constant voltage source charges the aerosol generating devices with a small current, which requires an extended period of time and has a disadvantage of long charging time.

### SUMMARY OF THE DISCLOSURE

The present disclosure provides a split-type aerosol generating device, and the split-type aerosol generating device includes an aerosol generating unit and a current source power supply unit.

The aerosol generating unit is configured to generate an aerosol, and the aerosol generating unit includes at least one hybrid capacitor.

The current source power supply unit is connected to the aerosol generating unit, and the current source power supply unit is configured to charge the at least one hybrid capacitor.

In some embodiments, the aerosol generating unit includes at least one heater and a first control circuit.

The at least one heater is configured to heat an aerosol substrate at a low temperature to generate the aerosol.

The first control circuit is configured to control the power supply start charging or stop charging the heater. One end of the first control circuit is connected to the at least one heater, and the other end of the first control circuit is connected to the at least one hybrid capacitor.

The at least one hybrid capacitor is configured to supply power to the at least one heater.

In some embodiments, a plurality of heaters are arranged in parallel or in series, and a plurality of hybrid capacitors are arranged in parallel or in series.

In some embodiments, the aerosol generating unit further includes a housing and a first charging interface.

The housing defines an accommodation space, and the accommodation space is configured to accommodate the aerosol substrate and the at least one heater.

The first charging interface is configured to connect the first control circuit and the current source power supply unit. The current source power supply unit is configured to supply power to the at least one hybrid capacitor through the first control circuit.

In some embodiments, the accommodation space and the at least one hybrid capacitor are respectively arranged on two ends of the aerosol generating unit, and the first charging interface is disposed on a side wall of the housing.

In some embodiments, the current source power supply unit includes a charging compartment, a discharging interface, a charging element, and a second control circuit.

The charging compartment is configured to accommodate the aerosol generating unit.

The discharging interface is connected to the first charging interface.

The charging element is configured to provide a charging voltage.

The second control circuit connects the charging element to the discharging interface. The second control circuit is configured to control the charging element to discharge the charging voltage to the at least one hybrid capacitor through the discharging interface.

In some embodiments, the charging compartment defines an opening, the aerosol generating unit is disposed in the charging compartment through the opening, and the discharging interface is disposed on a side wall of the charging compartment away from the opening.

In some embodiments, the charging element is a hybrid capacitor or a rechargeable battery.

In some embodiments, the current source power supply unit further includes a second charging interface. The second charging interface is connected to the second control circuit, and an external power supply is configured to charge the charging element through the second control circuit.

In some embodiments, the first control circuit is configured to determine an initial parameter value of the at least one hybrid capacitor. The aerosol generating unit is charged by the current source power supply unit, and a parameter value of the at least one hybrid capacitor is caused to reach a preset value.

The initial parameter value includes any one of an initial voltage, an initial charge quantity, an initial capacity, and initial energy. The parameter value includes any one of a charge quantity, a capacity, a charging time, and energy.

The benefits of the present disclosure are as follows. Different from the related art, in the present disclosure, a split-type aerosol generating device is provided. The split-type aerosol generating device includes an aerosol generating unit and a current source power supply unit. The aerosol generating unit is configured to generate an aerosol, and the aerosol generating unit includes at least one hybrid capacitor. The current source power supply unit is connected to the aerosol generating unit, and the current source power supply unit is configured to charge the at least one hybrid capacitor. The present disclosure provides the current source power supply unit as a power supply device and the hybrid capacitor as a power supply of the aerosol generating unit. In this way, the current source power supply unit outputs a large current to charge the hybrid capacitor, thereby shortening the charging time and improving the charging efficiency.

It should be understood that the foregoing general description and the following detailed description are exemplary and explanatory only, and do not limit the present disclosure.

### BRIEF DESCRIPTION OF THE DRAWINGS

In order to more clearly illustrate the technical solutions in some embodiments of the present disclosure, hereinafter, a brief introduction will be given to the accompanying drawings that are used in the description of some embodiments. Obviously, the accompanying drawings in the description below are merely some embodiments of the present disclosure. For those of ordinary skill in the art, other accompanying drawings may be obtained based on these accompanying drawings without any creative efforts.
FIG. 1 is a structural schematic view of a split-type aerosol generating device in an embodiment of the present disclosure.
FIG. 2 is a structural schematic view of an aerosol generating unit of FIG. 1 in an embodiment of the present disclosure.
FIG. 3 is a structural schematic view of a current source power supply unit of FIG. 1 in an embodiment of the present disclosure.

### DETAILED DESCRIPTION

In order for those skilled in the art to better understand the technical solutions of the present disclosure, the split-type aerosol generating device provided in the present disclosure may be further described in detail below with reference to the accompanying drawings and embodiments. It should be understood that the described embodiments are only a part of the embodiments of the present disclosure, and not all embodiments. Based on the embodiments in the present disclosure, all other embodiments obtained by those of ordinary skill in the art without creative effort are within the scope of the present disclosure.

The terms "first", "second", etc. in the present disclosure are configured to distinguish different objects, not to describe a specific order. In addition, the terms "include", "comprise", and "have", as well as any variations thereof, are intended to cover non-exclusive inclusions. For example, a process, a method, a system, a product, or a device that includes a series of operations or units is not limited to the listed operations or units, but optionally includes operations or units that are not listed, or optionally includes other operations or units that are inherent to these processes, methods, products, or devices.

As an emerging technology, an electronic atomization device replaces a traditional burning-type cigarette by heating e-liquid or low-temperature baking cigarette. An operating temperature of the electronic atomization device is low, and harmful components in the smoke generated by the electronic atomization device are far less than those of the traditional burning-type cigarette. The use of the electronic atomization device may greatly avoid the adverse effects of cigarettes on the human body, so that smoking by using the electronic atomization device becomes a healthier way of smoking.

At present, the electronic atomization devices on the market are mainly divided into two types. One type is the electronic atomization smoking set that may generate an inhalable smoke by evaporating e-liquid, and the other type is the aerosol generating device that heats a tobacco aerosol generating substrate at a low temperature but does not burn the tobacco aerosol generating substrate to generate the inhalable smoke.

For the aerosol generating device, generally, a heater such as a heating plate is inserted into the aerosol generating substrate to heat the aerosol generating substrate. By controlling a heating temperature, the components in the aerosol generating substrate volatilize to generate smoke for human inhalation. A power supply used in the portable low-temperature baking integrated appliance system for generating aerosols in related art is a lithium-ion battery, which has problems such as low safety, short service life, and long charging time. Further, in the related art, the appliance system is usually charged by a constant voltage source. However, in the last half of a charge period, the constant voltage source charges the appliance system with a small current, which requires an extended period of time and has a disadvantage of long charging time.

The present disclosure provides a split-type aerosol generating device to solve the problems of the power supply used in the split-type aerosol generating device, such as low safety, short service life, and long charging time.

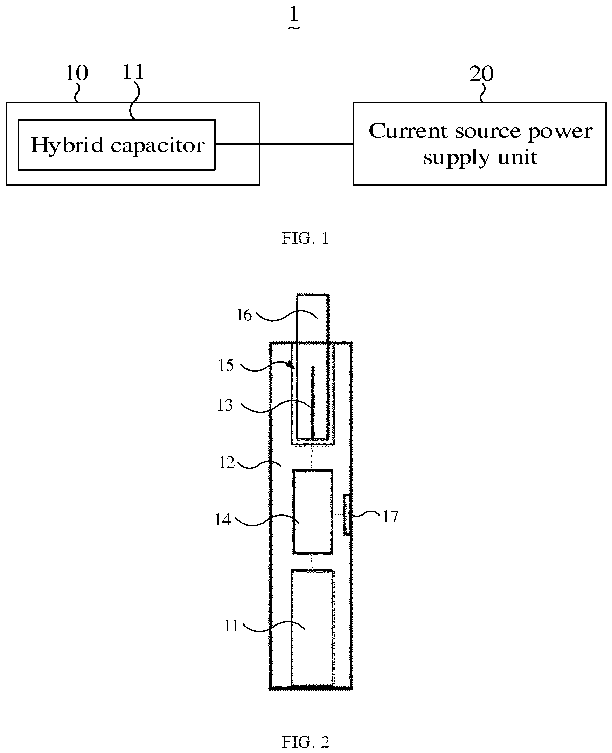

As illustrated in FIG. 1, FIG. 1 is a structural schematic view of a split-type aerosol generating device in an embodiment of the present disclosure. As illustrated in FIG. 1, the split-type aerosol generating device 1 includes an aerosol generating unit 10 and a current source power supply unit 20.

The aerosol generating unit 10 is configured to generate an aerosol and includes at least one hybrid capacitor 11. The current source power supply unit 20 is connected to the aerosol generating unit 10 and is configured to charge the at least one hybrid capacitor 11 of the aerosol generating unit 10.

In the present embodiment, the hybrid capacitor 11 is different from an ordinary capacitor or a lithium battery. The hybrid capacitor 11 has the advantages of large charge and discharge current and long service life. The aerosol generating unit 10 uses the hybrid capacitor 11 as a power supply, and the hybrid capacitor 11 may be charged with a super large current, thereby reducing charging time, and improving the security of the power supply and the power cycle service life.

The current source power supply unit 20 is a constant current source. The constant current source is different from the constant voltage source. The constant voltage source charges with the small current in the last half of the charge period and requires the extended period of time, while the current source power supply unit 20 is configured to charge with a constant current during the entire charge period, in order to shorten the charging time for the aerosol generating unit 10 and improve charge efficiency.

As illustrated in FIG. 1 and FIG. 2, FIG. 2 is a structural schematic view of an aerosol generating unit of FIG. 1 in an embodiment of the present disclosure. As illustrated in FIG. 2, the aerosol generating unit 10 includes a housing 12, a heater 13, and a first control circuit 14. The heater 13, the first control circuit 14, and the hybrid capacitor 11 are disposed in the housing 12.

The housing 12 defines an accommodation space 15, and the accommodation space 15 is configured to accommodate an aerosol substrate 16 and the heater 13. In the present embodiment, the housing 12 is a cuboid, the accommodation space 15 and the hybrid capacitor 11 are respectively arranged on two ends of the aerosol generating unit 10. The first control circuit 14 is disposed between the accommodation space 15 and the hybrid capacitor 11, to connect the heater 13 and the hybrid capacitor 11.

In some embodiments, the housing 12 may be a cylinder or other shapes. In some embodiments, the accommodation space 15 and the hybrid capacitor 11 may be disposed on the same side of the housing 12, and the first control circuit 14 may be disposed on the other side of the housing 12. Alternatively, the accommodation space 15 and the first control circuit 14 are disposed on one side of the housing 12, and the hybrid capacitor 11 is disposed on the other side of the housing 12.

The heater 13 is configured to heat the aerosol substrate 16 at a low temperature to generate an aerosol. In the present embodiment, the aerosol generating unit 10 may include one heater 13, one end of the heater 13 is disposed close to the aerosol substrate 16, to heat the aerosol substrate 16 at the low temperature, and the other end of the heater 13 is connected to the first control circuit 14.

In some embodiments, the aerosol generating unit 10 may include a plurality of heaters 13, and the plurality of heaters 13 are connected in series or in parallel.

In some embodiments, in response to the plurality of heaters 13 being arranged in series, one end of each of the plurality of heaters 13 is disposed close to the aerosol substrate 16, and the other end of each of the heater 13 is sequentially connected to the other end of an adjacent heater 13, and the other end of the last heater 13 is connected to the first control circuit 14. In response to the plurality of heaters 13 being arranged in parallel, one end of each heater 13 is disposed close to the aerosol substrate 16, and the other end of each heater 13 is connected to the first control circuit 14.

The hybrid capacitor 11 is configured to supply power to the heater 13. In the present embodiment, the aerosol generating unit 10 includes one hybrid capacitor 11, and one end of the hybrid capacitor 11 is connected to the first control circuit 14.

In some embodiments, the aerosol generating unit 10 includes a plurality of hybrid capacitors 11, and the plurality of hybrid capacitors 11 are connected in series or in parallel.

In some embodiments, in response to the plurality of hybrid capacitors 11 being arranged in series, one end of each hybrid capacitor 11 is sequentially connected to one end of an adjacent hybrid capacitor 11, and the other end of the last hybrid capacitor 11 is connected to the first control circuit 14. In response to the plurality of hybrid capacitors 11 being arranged in parallel, one end of each hybrid capacitor 11 is connected to the first control circuit 14.

One end of the first control circuit 14 is connected to the heater 13, and the other end of the first control circuit 14 is connected to the hybrid capacitor 11. The first control circuit 14 controls the power supply start charging or stop charging the heater 13 by controlling the charging and discharging of the hybrid capacitor 11.

As illustrated in FIG. 1, the aerosol generating unit 10 further includes a first charging interface 17, and the first charging interface 17 is configured to connect the first control circuit 14 to the current source power supply unit 20, so that the current source power supply unit 20 supplies power to the hybrid capacitor 11 through the first control circuit 14.

In some embodiments, the first charging interface 17 is disposed on a side wall of the housing 12, and then is disposed on a side wall of the aerosol generating unit 10, so that the current source power supply unit 20 may be connected to the first charging interface 17 to realize connection with the first control circuit 14.

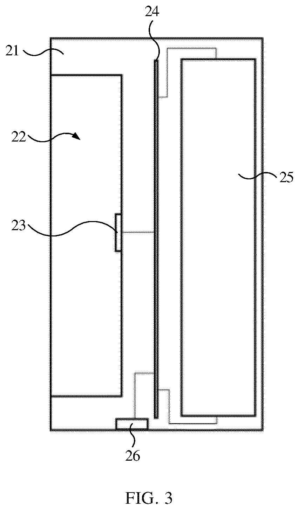

As illustrated in FIG. 1 to FIG. 3, FIG. 3 is a structural schematic view of a current source power supply unit of FIG. 1 in an embodiment of the present disclosure. As illustrated in FIG. 3, the current source power supply unit 20 includes a current source housing 21, a charging compartment 22, a discharging interface 23, a second control circuit 24, and a charging element 25.

One end of the current source housing 21 defines the charging compartment 22, and the discharging interface 23 is disposed in the charging compartment 22. The second control circuit 24 and the charging element 25 are disposed in the current source housing 21.

The charging compartment 22 is configured to accommodate the aerosol generating unit 10. The charging compartment 22 defines an opening (not shown in the figures), so that the aerosol generating unit 10 is disposed in the charging compartment 22 through the opening.

The discharging interface 23 is disposed on a side wall of the charging compartment 22 away from the opening. The discharging interface 23 is connected to the first charging interface 17, so that the aerosol generating unit 10 is connected to the current source power supply unit 20.

The charging element 25 is configured to provide a charging voltage and supply power to the hybrid capacitor 11. In the present embodiment, the charging element 25 may be the hybrid capacitor or a rechargeable battery. In some embodiments, the rechargeable battery may be a lithium battery.

The second control circuit 24 connects the charging element 25 to the discharging interface 23, to control the charging element 25 to discharge the charging voltage to the hybrid capacitor 11 through the discharging interface 23.

In response to the aerosol generating unit 10 being charged by the current source power supply unit 20, operations are as follows.

(1) The first control circuit 14 determines an initial parameter value of at least one hybrid capacitor 11.

(2) The current source power supply unit 20 charges the at least one hybrid capacitor 11 through the first control circuit 14, that is, the aerosol generating unit 10 is charged.

(3) The first control circuit 14 determines that a parameter value of the at least one hybrid capacitor 11 reaches a preset value, and the current source power supply unit 20 stops charging.

The initial parameter value includes any one of an initial voltage, an initial charge quantity, an initial capacity, and initial energy. The parameter value includes any one of a charge quantity, a capacity, a charging time, and energy. The unit of the initial voltage is volt (V). The unit of the initial charge quantity is the same as that of the charge quantity, which is coulomb (C). The unit of the initial capacity is the same as that of the capacity, which is milliampere/hour (mA/h). The unit of the initial energy is the same as that of the energy, which is watt/hour (W/h). The unit of charging time is watt/hour (W/h).

In some embodiments, after the first control circuit 14 determines a total initial voltage of the at least one hybrid capacitor 11, the current source power supply unit 20 charges the at least one hybrid capacitor 11 through the first control circuit 14 until a total charge quantity of the at least one hybrid capacitor 11 reaches a preset value, and the current source power supply unit 20 stops charging.

After the first control circuit 14 determines the total initial voltage of the at least one hybrid capacitor 11, the current source power supply unit 20 charges the at least one hybrid capacitor 11 through the first control circuit 14 until a total capacity of the at least one hybrid capacitor 11 reaches the preset value, and the current source power supply unit 20 stops charging.

After the first control circuit 14 determines total initial energy of the at least one hybrid capacitor 11, the current source power supply unit 20 charges the at least one hybrid capacitor 11 through the first control circuit 14 until a total charging time of the at least one hybrid capacitor 11 reaches the preset value, and the current source power supply unit 20 stops charging.

After the first control circuit 14 determines the total initial energy of the at least one hybrid capacitor 11, the current source power supply unit 20 charges the at least one hybrid capacitor 11 through the first control circuit 14 until total energy of the at least one hybrid capacitor 11 reaches the preset value, and the current source power supply unit 20 stops charging.

After the first control circuit 14 determines the total initial energy of the at least one hybrid capacitor 11, the current source power supply unit 20 charges the at least one hybrid capacitor 11 through the first control circuit 14 until the total charge quantity of the at least one hybrid capacitor 11 reaches the preset value, and the current source power supply unit 20 stops charging.

After the first control circuit 14 determines the total initial energy of the at least one hybrid capacitor 11, the current source power supply unit 20 charges the at least one hybrid capacitor 11 through the first control circuit 14 until the total capacity of the at least one hybrid capacitor 11 reaches the preset value, and the current source power supply unit 20 stops charging.

After the first control circuit 14 determines a total initial charge quantity of the at least one hybrid capacitor 11, the current source power supply unit 20 charges the at least one hybrid capacitor 11 through the first control circuit 14 until the total charging time of the at least one hybrid capacitor 11 reaches the preset value, and the current source power supply unit 20 stops charging.

After the first control circuit 14 determines the total initial charge quantity of the at least one hybrid capacitor 11, the current source power supply unit 20 charges the at least one hybrid capacitor 11 through the first control circuit 14 until the total energy of the at least one hybrid capacitor 11 reaches the preset value, and the current source power supply unit 20 stops charging.

After the first control circuit 14 determines the total initial charge quantity of the at least one hybrid capacitor 11, the current source power supply unit 20 charges the at least one hybrid capacitor 11 through the first control circuit 14 until the total charge quantity of the at least one hybrid capacitor 11 reaches the preset value, and the current source power supply unit 20 stops charging.

After the first control circuit 14 determines the total initial charge quantity of the at least one hybrid capacitor 11, the current source power supply unit 20 charges the at least one hybrid capacitor 11 through the first control circuit 14 until the total capacity of the at least one hybrid capacitor 11 reaches the preset value, and the current source power supply unit 20 stops charging.

After the first control circuit 14 determines a total initial capacity of the at least one hybrid capacitor 11, the current source power supply unit 20 charges the at least one hybrid capacitor 11 through the first control circuit 14 until the total charging time of the at least one hybrid capacitor 11 reaches the preset value, and the current source power supply unit 20 stops charging.

After the first control circuit 14 determines the total initial capacity of the at least one hybrid capacitor 11, the current source power supply unit 20 charges the at least one hybrid capacitor 11 through the first control circuit 14 until the total energy of the at least one hybrid capacitor 11 reaches the preset value, and the current source power supply unit 20 stops charging.

After the first control circuit 14 determines the total initial capacity of the at least one hybrid capacitor 11, the current source power supply unit 20 charges the at least one hybrid capacitor 11 through the first control circuit 14 until the total charge quantity of the at least one hybrid capacitor 11 reaches the preset value, and the current source power supply unit 20 stops charging.

After the first control circuit 14 determines the total initial capacity of the at least one hybrid capacitor 11, the current source power supply unit 20 charges the at least one hybrid capacitor 11 through the first control circuit 14 until the total capacity of the at least one hybrid capacitor 11 reaches the preset value, and the current source power supply unit 20 stops charging.

As illustrated in FIG. 3, the current source power supply unit 20 further includes a second charging interface 26. The second charging interface 26 is connected to the second control circuit 24, so that an external power supply charges the charging element 25 through the second control circuit 24.

The external power supply may be the constant voltage source or the constant current source.

The present disclosure provides the current source power supply unit 20 as a power supply device and the at least one hybrid capacitor 11 as a power supply of the aerosol generating unit 10, so that the current source power supply unit 20 outputs the super large current to charge the at least one hybrid capacitor 11, which reduces the charging time, and improves the charge efficiency, the security of the power supply, and the power cycle service life.

The above description are only some embodiments of the present disclosure, and are not intended to limit the scope of the present disclosure. Any equivalent structure or equivalent flow transformation made by using the contents of the specification and accompanying drawings of the present disclosure, or directly or indirectly applied to other related technical fields, is included in the scope of the patent protection of the present disclosure.

## Claims

1. A split-type aerosol generating device, comprising:
an aerosol generating unit, configured to generate an aerosol, wherein the aerosol generating unit comprises at least one hybrid capacitor; and
a current source power supply unit, connected to the aerosol generating unit, wherein the current source power supply unit is configured to charge the at least one hybrid capacitor.

2. The split-type aerosol generating device according to claim 1, wherein the aerosol generating unit comprises:
at least one heater, configured to heat an aerosol substrate at a low temperature to generate the aerosol; and
a first control circuit, configured to control the power supply start charging or stop charging the heater, wherein one end of the first control circuit is connected to the at least one heater, and the other end of the first control circuit is connected to the at least one hybrid capacitor;
wherein the at least one hybrid capacitor is configured to supply power to the at least one heater.

3. The split-type aerosol generating device according to claim 2, wherein a plurality of heaters are arranged in parallel or in series, and a plurality of hybrid capacitors are arranged in parallel or in series.

4. The split-type aerosol generating device according to claim 2, wherein the aerosol generating unit further comprises:
a housing, defining an accommodation space, wherein the accommodation space is configured to accommodate the aerosol substrate and the at least one heater; and
a first charging interface, configured to connect the first control circuit to the current source power supply unit, wherein the current source power supply unit is configured to supply power to the at least one hybrid capacitor through the first control circuit.

5. The split-type aerosol generating device according to claim 4, wherein the accommodation space and the at least one hybrid capacitor are respectively arranged on two ends of the aerosol generating unit, and the first charging interface is disposed on a side wall of the housing.

6. The split-type aerosol generating device according to claim 4, wherein the current source power supply unit comprises:
a charging compartment, configured to accommodate the aerosol generating unit;
a discharging interface, connected to the first charging interface;
a charging element, configured to provide a charging voltage; and
a second control circuit, connecting the charging element to the discharging interface, wherein the second control circuit is configured to control the charging element to discharge the charging voltage to the at least one hybrid capacitor through the discharging interface.

7. The split-type aerosol generating device according to claim 6, wherein the charging compartment defines an opening, the aerosol generating unit is disposed in the charging compartment through the opening, and the discharging interface is disposed on a side wall of the charging compartment away from the opening.

8. The split-type aerosol generating device according to claim 7, wherein the charging element is a hybrid capacitor or a rechargeable battery.

9. The split-type aerosol generating device according to claim 8, wherein the current source power supply unit further comprises a second charging interface, the second charging interface is connected to the second control circuit, and an external power supply is configured to charge the charging element through the second control circuit.

10. The split-type aerosol generating device according to claim 9, wherein the first control circuit is configured to determine an initial parameter value of the at least one hybrid capacitor; the aerosol generating unit is charged by the current source power supply unit, and a parameter value of the at least one hybrid capacitor is caused to reach a preset value;
wherein the initial parameter value comprises any one of an initial voltage, an initial charge quantity, an initial capacity, and initial energy; and the parameter value comprises any one of a charge quantity, a capacity, a charging time, and energy.
